# EUROPÄISCHE PATENTSCHRIFT

(11) **EP 3 648 943 B1**
(45) Veröffentlichungstag und Bekanntmachung des Hinweises auf die Patenterteilung: **07.12.2022**
(21) Anmeldenummer: 18734491.6
(22) Anmeldetag: 19.06.2018
(51) Int. Cl.: B29C 45/16, G01F 1/58

(54) **VERFAHREN ZUM HERSTELLEN EINES MAGNETISCH-INDUKTIVEN DURCHFLUSSMESSGERÄTS UND EIN MAGNETISCH-INDUKTIVES DURCHFLUSSMESSGERÄT**
METHOD FOR PRODUCING A MAGNETIC-INDUCTIVE FLOW METER AND A MAGNETIC-INDUCTIVE FLOW METER
PROCÉDÉ POUR LA FABRICATION D'UN DÉBITMÈTRE À INDUCTION MAGNÉTIQUE ET DÉBITMÈTRE À INDUCTION MAGNÉTIQUE

(30) Priorität: 06.07.2017 DE 102017115149
(43) Veröffentlichungstag der Anmeldung: 13.05.2020
(73) Patentinhaber: Endress+Hauser Flowtec AG, 4153 Reinach (CH)
(72) Erfinder: TSCHUDIN, Beat, 4153 Reinach (CH)
(74) Vertreter: Waselikowski, Stefan
(86) Internationale Anmeldenummer: PCT/EP2018/066256
(87) Internationale Veröffentlichungsnummer: WO 2019/007671

(56) Entgegenhaltungen:
- DE-A1-102010 030 229
- US-A- 4 567 775
- US-A1- 2014 083 200

## Beschreibung

Die Erfindung betrifft ein Verfahren zum Herstellen eines magnetisch-induktiven Durchflussmessgeräts zur Messung des Volumendurchflusses bzw. der Durchflussgeschwindigkeit eines durch ein Messrohr strömenden Mediums sowie ein solches Durchflussmessgerät.

Das magnetisch-induktive Messprinzip wird schon seit langer Zeit für Durchflussmessungen verwendet, wobei entsprechende magnetisch-induktive Durchflussmessgeräte bereits eine Vielzahl an Verbesserungen und Weiterentwicklungen durchlaufen haben. Je nach Einsatzbereich der magnetisch-induktiven Durchflussmessgeräte kann das Herstellungsverfahren dieser Durchflussmessgeräte variieren. Bei kostengünstigen Durchflussmessgeräten hat es sich als vorteilhaft herausgestellt, ein Messrohr eines magnetisch-induktiven Durchflussmessgeräts durch ein Spritzgussverfahren herzustellen, wobei Messelektroden des Durchflussmessgeräts während des Spritzgießens eingegossen werden, siehe beispielsweise die Offenlegungsschrift DE 202008017789 U1. Problematisch bei solchen Durchflussmessgeräten ist der Übergang zwischen Messrohr und Messelektrode auf einer Messrohrkanaloberfläche, da Gusswerkzeuge beim Spritzgießen sehr präzise auf die Position der Messelektroden eingestellt werden müssen, um einen sauberen Übergang zu gewährleisten. Anderenfalls kann Spritzgussmaterial die Messelektroden im Bereich der Messrohrkanaloberfläche teilweise überdecken oder in einem Randbereich der Messelektroden eine Absatzkante bzw. einen Spalt im Messrohrkanal hervorrufen, was eine Strömung eines Mediums im Messrohrs stört.

DE 10 2010 030 229 A1 beschreibt ein Verfahren zur Herstellung eines magnetisch-induktiven Durchflussmessgeräts durch Umgießen einer Elektrode mit verflüssigtem Kunststoff nach dem Stand der Technik.

Aufgabe der Erfindung ist es daher, ein Verfahren zum Herstellen eines magnetisch-induktiven Durchflussmessgeräts sowie ein magnetisch-induktives Durchflussmessgerät vorzuschlagen, bei welchem die Nachteile des Stands der Technik vermieden werden.

Die Aufgabe wird gelöst durch ein Verfahren zum Herstellen eines magnetisch-induktiven Durchflussmessgeräts gemäß dem unabhängigen Anspruch 1 sowie durch ein magnetisch-induktives Durchflussmessgerät gemäß dem unabhängigen Anspruch 5.

Ein erfindungsgemäßes Verfahren zum Herstellen eines magnetisch-induktiven Durchflussmessgeräts umfasst folgende Verfahrensschritte:
Bereitstellen und Positionieren einer inneren Gussform und einer äußeren Gussform sowie zweier Messelektroden in einem ersten Verfahrensschritt,
wobei zwischen der inneren Gussform und der äußeren Gussform ein Ringkanal gebildet ist, wobei der Ringkanal eine Ringkanalachse aufweist,
wobei die innere Gussform mindestens zwei einander abgewandte, ringförmige, Dichtflächen aufweist, die jeweils eine Aussparung umgeben,
wobei die Oberflächennormalen der Dichtflächen in entgegengesetzte Richtungen senkrecht zur Ringkanalachse verlaufen,
wobei die Messelektroden jeweils einen Elektrodenschaft und eine zur Ringkanalachse gerichtete Stirnfläche mit einem ringförmigen Randbereich und einem von dem Randbereich umgebenen Mittenbereich aufweisen,
wobei die beiden Messelektroden von der äußeren Gussform jeweils in der Weise gehalten werden, dass die Elektrodenschafte den Ringkanal jeweils in Richtung einer der Oberflächennormalen durchsetzen, und
dass die ringförmigen Randbereiche an jeweils einer der ringförmigen Dichtfläche anliegen, wobei die Dichtflächen sowie die ringförmigen Randbereiche planar sind;
Ausfüllen des Ringkanals mit einem einen Messrohrkörper des Messrohrs bildenden Kunststoff durch Spritzgießen;
Aushärten lassen oder Aushärten des Kunststoffs; und
Entfernen der inneren Gussform und der äußeren Gussform.

Mit "Entfernen der inneren Gussform und der äußeren Gussform" ist hierbei keine Reihenfolge der Entfernung der einzelnen Gussformen angegeben.

Das Spritzgießen kann beispielsweise ein Thermoplast-Spritzgießen oder ein Duroplast-Spritzgießen sein.

Der Kunststoff weist dabei vorteilhafterweise zumindest eines der folgenden Materialien auf: Polyetheretherketon (PEEK), Polyphenylensulfid (PPS), Polyphtalamid (PPA), Polyamid (PA). Insbesondere ist der Kunststoff hochtemperaturbeständig.

In einer Ausgestaltung des Verfahrens weist die innere Gussform einen ersten Innenteil und einen zweiten Innenteil auf, wobei das Bereitstellen der inneren Gussform ein Zusammenführen des ersten Innenteils und des zweiten Innenteils umfasst,
wobei ein erster Teil der Aussparung dem ersten Innenteil zugehörig ist, und wobei ein zweiter Teil der Aussparung dem zweiten Teil der Aussparung zugehörig ist.

In einer Ausgestaltung des Verfahrens weist die äußere Gussform einen ersten Außenteil und einen zweiten Außenteil auf, wobei das Bereitstellen der äußeren Gussform ein Zusammenführen des ersten Außenteils und des zweiten Außenteils umfasst,
wobei jeweils ein erster Teil der Aufnahmen dem ersten Außenteil zugehörig sind, und wobei jeweils ein zweiter Teil der Aufnahmen dem zweiten Außenteil zugehörig sind.

In einer Ausgestaltung des Verfahrens umgreifen die Aufnahmen der äußeren Gussform die jeweilige Messelektrode auf einer dem Ringkanal abgewandten Seite der Messelektroden spritzgussdicht.

Ein erfindungsgemäßes magnetisch-induktives Durchflussmessgerät zur Messung des Volumendurchflusses bzw. der Durchflussgeschwindigkeit eines durch ein Messrohr strömenden Mediums umfasst:
Ein Messrohr zum Führen des Mediums, welches Messrohr nach einem erfindungsgemäßen Verfahren hergestellt ist, wobei das Messrohr eine Messrohrachse aufweist;
ein Magnetsystem mit mindestens einem Spulensystem zum Erzeugen eines Magnetfelds, welches Magnetfeld senkrecht zur Messrohrachse steht;
ein Paar zumindest teilweise im Messrohr angeordneter Messelektroden zum Erfassen einer im Medium durch das Magnetfeld induzierten elektrischen Spannung, welche elektrische Spannung abhängig vom Durchfluss bzw. der Geschwindigkeit des Mediums sowie von der Stärke sowie der Ausrichtung des Magnetfelds ist, wobei die Messelektroden mit dem Medium in Kontakt stehen;
eine elektronische Mess-/Betriebsschaltung zum Betreiben des Magnetsystems und der Messelektroden, sowie zum Bestimmen und Ausgeben einer den Durchfluss repräsentierenden Messgröße,
wobei das Messrohr entlang der Messrohrachse einen Führungskanal aufweist, welcher Führungskanal während des Spritzgießens durch Überdecken der inneren Gussform mittels eines Kunststoffs ausgebildet wird,
wobei jede Messelektrode eine zur Messrohrachse gerichtete Stirnfläche sowie eine Messelektrodenmantelfläche aufweist, wobei die Messelektroden während des Spritzgießens bezüglich der inneren Position gehalten sind,
wobei die Messelektroden im Messrohr eingegossen sind,
wobei die Stirnfläche einen ringförmigen Randbereich und einem von dem Randbereich umgebenen Mittenbereich aufweist, wobei die Dichtflächen sowie die ringförmigen Randbereiche planar sind.

In einer Ausgestaltung des magnetisch-induktiven Durchflussmessgeräts schließt der Randbereich der Messelektrode mit einer Wand des Führungskanals bündig ab.

In einer Ausgestaltung des magnetisch-induktiven Durchflussmessgeräts ist eine zur Stirnfläche gewandte erste Seite der Messelektrodenmantelfläche dicht von einer Messrohrwand umschlossen. In einer Ausgestaltung des magnetisch-induktiven Durchflussmessgeräts weist die Messelektrode im Bereich der ersten Seite mindestens eine Einkerbung oder mindestens eine Auswölbung zur Verankerung im Messrohr auf.

In einer Ausgestaltung des magnetisch-induktiven Durchflussmessgeräts weist die Messelektrode eine die Stirnfläche schneidende Längsachse auf, wobei die Einkerbung bzw. Auswölbung radialsymmetrisch um die Längsachse herum angeordnet ist.

In einer Ausgestaltung des magnetisch-induktiven Durchflussmessgeräts weist das Messrohr auf einer Außenseite für jede Messelektrode einen ringförmigen Vorsprung auf, welcher Vorsprung dazu eingerichtet ist, die Messelektrode auf einer der Messrohrachse abgewandten zweiten Seite der Messelektrode zumindest abschnittsweise zu umgreifen, wobei die Messelektrode im Bereich der zweiten Seite von der Ausstülpung beabstandet ist.

In einer Ausgestaltung des magnetisch-induktiven Durchflussmessgeräts weist das magnetisch-induktive Durchflussmessgerät für jede Messelektrode eine Dichtung auf, welche in die Beabstandung eingepresst ist.

In einer Ausgestaltung des magnetisch-induktiven Durchflussmessgeräts weicht ein Wärmeausdehnungskoeffizient des Messrohrs von einem Wärmeausdehnungskoeffizient der Messelektrode weniger als 30% und insbesondere weniger als 20% ab.

In einer Ausgestaltung weist die Messelektrode auf einer der Stirnseite abgewandten Seite einen Elektrodenstift oder ein Elektrodensackloch auf.

Im Folgenden wird die Erfindung anhand von Ausführungsbeispielen beschrieben.
Fig. 1 beschreibt die Verfahrensschritte einer Variante eines erfindungsgemäßen Verfahrens;
Figs. 2 a) bis 2 d) skizzieren Konturen beispielhafter Elektroden eines erfindungsgemäßen magnetisch-induktiven Durchflussmessgeräts;
Fig. 3 a) skizziert einen Querschnitt durch positionierte Gusswerkzeuge gemäß einer Variante des erfindungsgemäßen Verfahrens und Fig. 3 b) skizziert einen Ausschnitt eines Querschnitts eines erfindungsgemäßen magnetisch-induktiven Durchflussmessgeräts;
Fig. 4 a) skizziert einen Längsschnitt durch positionierte Gusswerkzeuge gemäß einer Variante des erfindungsgemäßen Verfahrens und Fig. 4 b) skizziert einen Ausschnitt eines Längsschnitts eines erfindungsgemäßen magnetisch-induktiven Durchflussmessgeräts; und
Fig. 5 skizziert schematisch den Aufbau eines beispielhaften erfindungsgemäßen magnetisch-induktiven Durchflussmessgeräts.

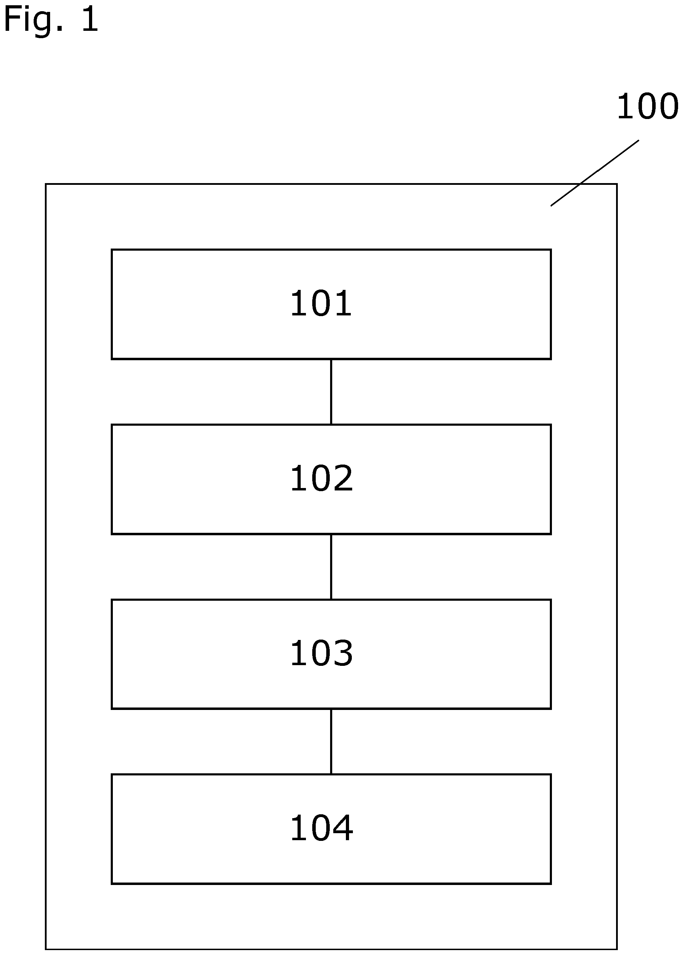

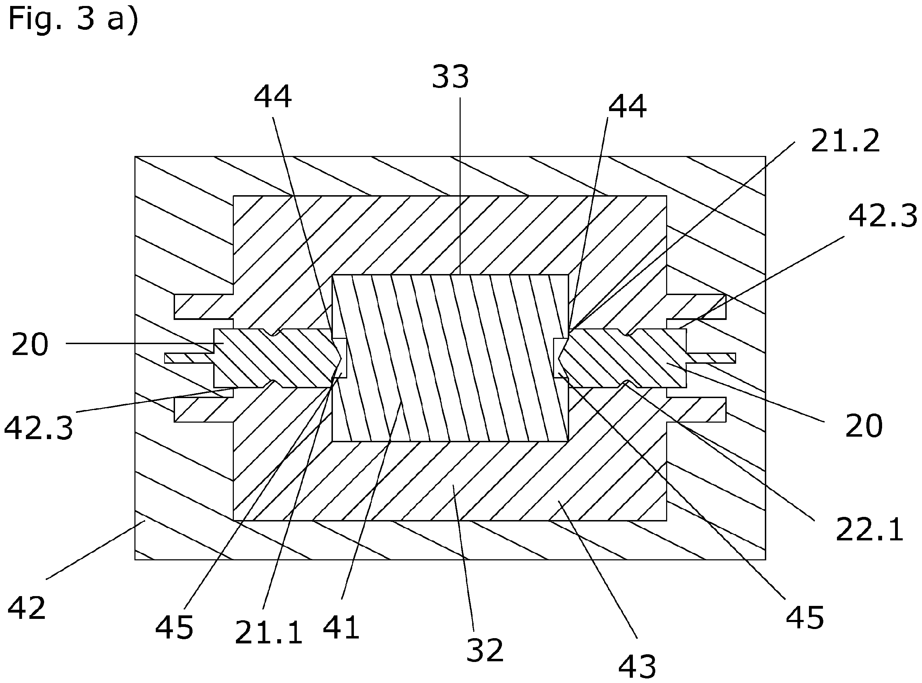

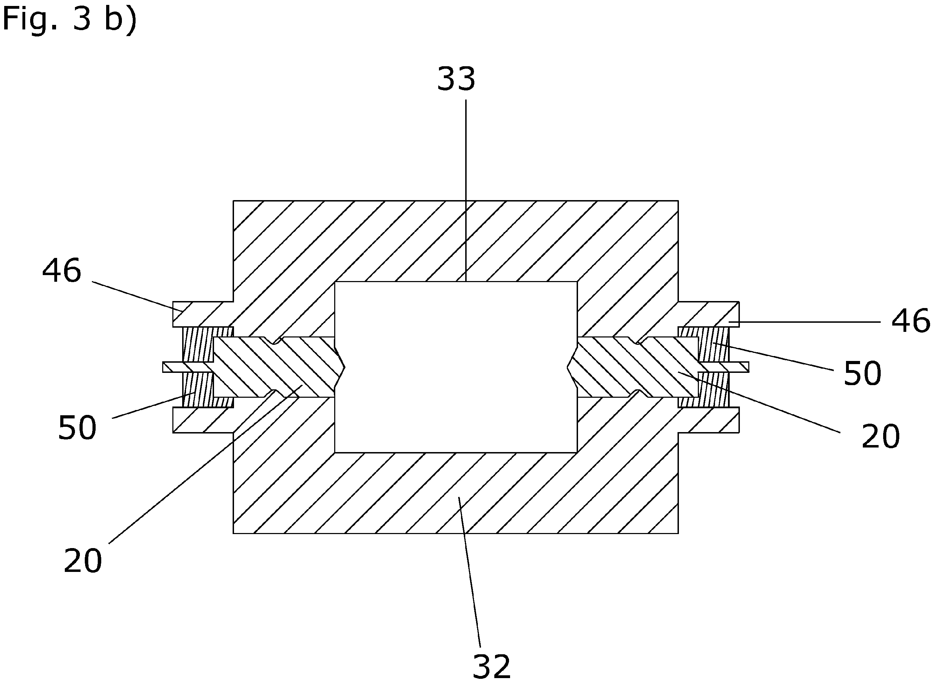

Fig. 1 beschreibt die Verfahrensschritte einer Variante eines erfindungsgemäßen Verfahrens 100 zum Herstellen eines Messrohrs eines magnetisch-induktiven Durchflussmessgeräts, wobei in einem ersten Verfahrensschritt 101 eine inneren Gussform 41 und eine äußeren Gussform 42 sowie zwei Messelektroden 20 bereitgestellt und positioniert werden. Das Positionieren der Gussformen und der Messelektroden führt zu einer Ausbildung eines Ringkanals 43 mit einer Ringkanalachse, siehe Figs. 3 a) und 4 a). Die innere Gussform 41 weist dabei zwei voneinander abgewandte Aussparungen 45 auf, welche jeweils von einer Dichtfläche 44 umgeben sind, wobei die Oberflächennormalen der Dichtflächen in entgegengesetzte Richtungen senkrecht zur Ringkanalachse verlaufen.

Die Messelektroden 20 weisen jeweils einen Elektrodenschaft 24 und eine zur Ringkanalachse gerichtete Stirnfläche 21 auf, wobei die Stirnfläche einen ringförmigen Randbereich 21.2 und einen von dem Randbereich umgebenen Mittenbereich 21.1 aufweist, wobei die beiden Messelektroden 20 von der äußeren Gussform jeweils in der Weise gehalten werden, dass die Elektrodenschafte 24 den Ringkanal jeweils in Richtung einer der Oberflächennormalen durchsetzen, und dass die ringförmigen Randbereiche 21.2 an jeweils einer der ringförmigen Dichtfläche anliegen. Die Mittenbereiche 21.1 ragen dabei in die Aussparungen 45 hinein, ohne in Kontakt zur inneren Gussform 41 zu treten. Das Einrichten von Elektroden mit Stirnflächen mit Randbereich und korrespondierender Aussparung mit die Aussparung umgebender Dichtfläche gewährleistet einen Abschluss des Mittenbereichs 21.1 der Stirnfläche.

In einem zweiten Verfahrensschritt 102 wird der Ringkanal mit einem einen Messrohrkörper des Messrohrs bildenden Kunststoff durch Spritzgießen ausgefüllt. Durch den Abschluss der Mittenbereiche 21.1 der Stirnflächen 21 der Messelektroden 20 bleibt der Kunststoff zu den Mittenbereichen beabstandet. Des Weiteren bleibt der Mittenbereich während des Spritzgießens von einem Anpressdruck zwischen Gussform und Messelektrode unbeaufschlagt.

In einem dritten Verfahrensschritt 103 wird der Kunststoff Aushärten gelassen.

In einem vierten Verfahrensschritt 104 werden die Gussformen entfernt.

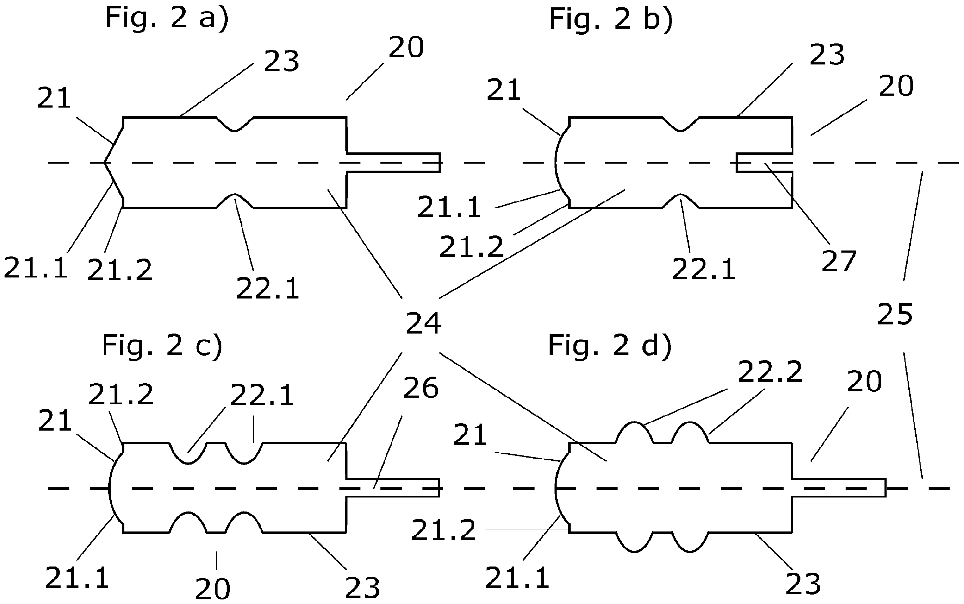

Figs. 2 a) bis 2 d) skizzieren Konturen verschiedener beispielhafter Messelektroden eines erfindungsgemäßen magnetisch-induktiven Durchflussmessgeräts, wobei die Messelektroden 20 jeweils einen Elektrodenschaft 24 mit einer Messelektrodenmantelfläche 23 und einer Stirnfläche 21 aufweisen. Die Stirnfläche 21 weist einen Mittenbereich 21.1 sowie einen Randbereich 21.2 auf, wobei der Mittenbereich beispielsweise kegelförmig (Fig. 2 a)) oder beispielsweise kreissegmentförmig sein kann (Figs. 2 b) bis 2 d)). Der Randbereich 21.2 ist dabei vorzugsweise senkrecht zu einer Längsachse 25 der Messelektrode. Die Messelektrode 20 weist zumindest eine Einkerbung 22.1 (Figs. 2 a) bis c) ) oder zumindest eine Auswölbung 22.2 (Fig. 2 d)) auf. Eine Messelektrode kann auch mindestens eine Einkerbung sowie mindestens eine Auswölbung aufweisen. Die mindestens eine Auswölbung 22.2 bzw. die mindestens eine Einkerbung 22.1 gewährleistet einen sicheren Halt der Messelektrode im Messrohr und somit eine stabile Position. Anstelle eines Elektrodenstifts 26 der Elektrode zur Kontaktierung der Messelektrode mit einer elektrischen Verbindungsleitung auf einer der Stirnseite abgewandten Seite kann die Messelektrode auch ein Elektrodensackloch 27 aufweisen, in welches Sackloch ein Stift mittels Presspassung eingebracht wird, siehe Fig. 2 b). Dies ist vorteilhaft bei Messelektrodenmaterialien, bei welchen ein Anbringen einer solchen Verbindungsleitung per Löten aufgrund der Materialeigenschaften schwer zu gewährleisten ist.

Fig. 3 a) skizziert einen Querschnitt durch eine bereitgestellte innere Gussform 41, äußere Gussform 42 und Elektroden 20 während des Aushärtens eines in den Ringkanal 43 eingebrachten Kunststoffs gemäß dem dritten Verfahrensschritt des erfindungsgemäßen Verfahrens. Die Elektroden liegen mittels ihrer Randbereiche 21.2 jeweils auf einer Dichtfläche 44 des inneren Gusswerkzeugs an, so dass die Mittenbereiche 21.1 der Messelektroden 20 vom inneren Gusswerkzeug 41 beabstandet sind. Die Messelektroden werden während des Spritzgießens durch die äußere Gussform mittels einer Aufnahme 42.3 der äußeren Gussform 42 und durch die innere Gussform mittels der Dichtflächen 44 gehalten, wobei eine zur Stirnfläche 21 gewandte erste Seite der Messelektrodenmantelfläche 23 von Kunststoff umgeben ist, wobei die erste Seite mindestens eine Auswölbung 22.2 bzw. mindestens eine Einkerbung 22.1 wie in Figs. 2 a) bis d) gezeigt aufweist. Nach Aushärten des Kunststoffs gewährleistet die Einkerbung bzw. die Auswölbung einen festen Sitz der Elektrode im Kunststoff bzw. im Messrohr.

Fig. 3 b) zeigt einen mit Fig. 3 a) korrespondierenden Ausschnitt eines Querschnitts durch ein beispielhaftes erfindungsgemäßes magnetisch-induktives Durchflussmessgerät mit einem Messrohr 30 nach Aushärten des Kunststoffs sowie nach Entfernen der Gussformen, wobei der ausgehärtete Kunststoff das Messrohr 30 des magnetisch-induktiven Durchflussmessgeräts ausbildet. Das Messrohr weist im Bereich der Elektroden jeweils einen ringförmigen Vorsprung 46 auf, welcher Vorsprung die Messelektrode 20 auf einer der Messrohrachse abgewandten zweiten Seite der Messelektrode abschnittsweise umgreift, wobei die Messelektrode im Bereich der zweiten Seite von dem Vorsprung beabstandet ist. Ein Dichtung 50 ist in einen Zwischenbereich zwischen Vorsprung 46 und der Messelektrode 20 eingelassen, um eine Dichtheit des magnetisch-induktiven Durchflussmessgeräts auch bei hohen Mediendrücken und/oder variablen Medientemperaturen zu gewährleisten. Unterschiedliche Wärmeausdehnungskoeffizienten von Messrohr 32 und Messelektroden 20 können bei Temperaturschwankungen eine nachlassende Dichtigkeit einer Grenze zwischen Messelektrode und Messrohr verursachen.

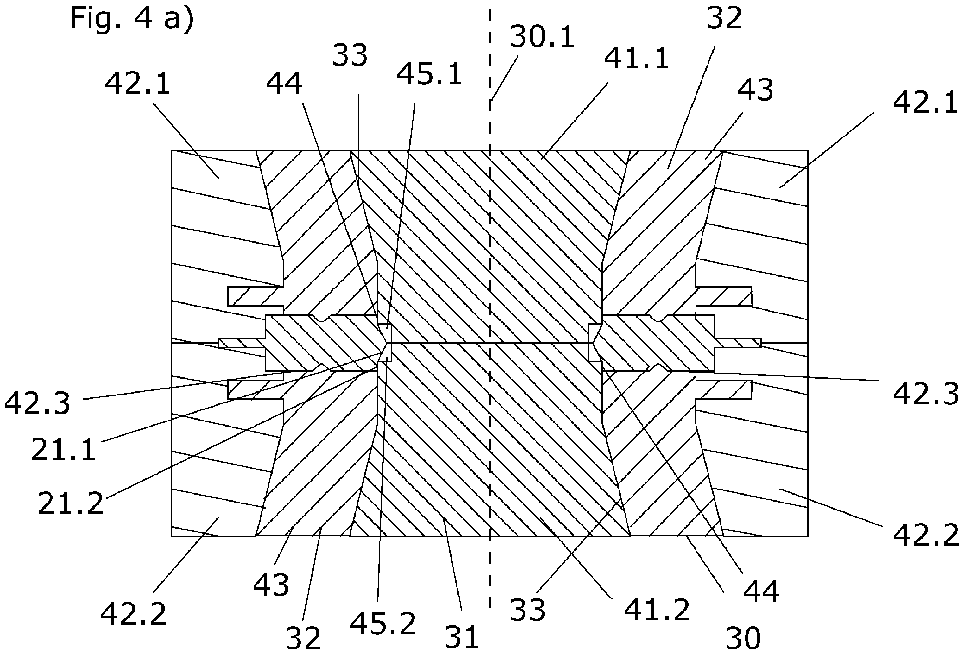

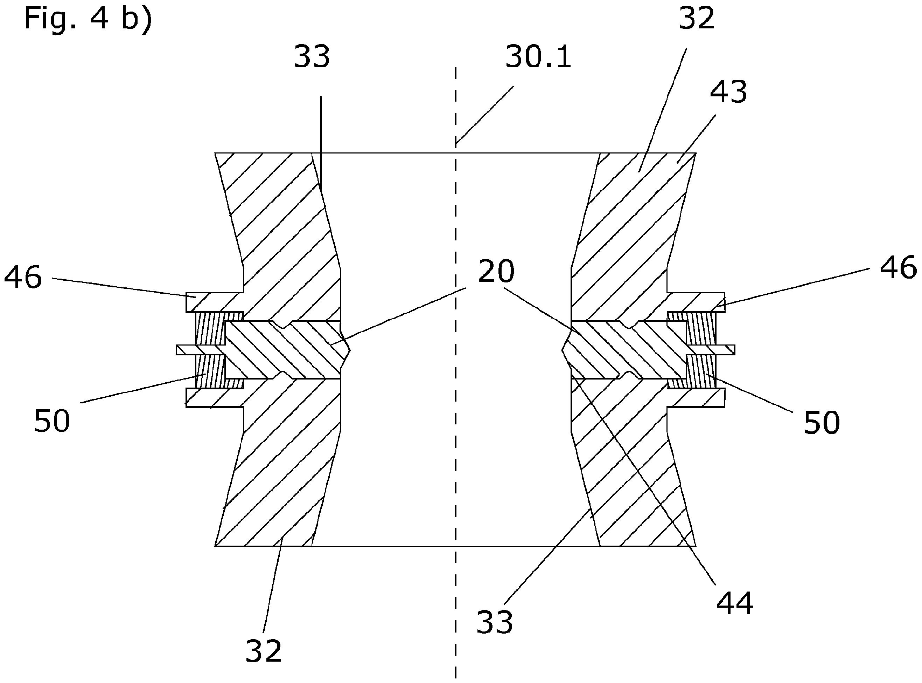

Fig. 4 a) skizziert einen zu Fig. 3 a) und Längsschnitt durch eine bereitgestellte innere Gussform 41, äußere Gussform 42 und Elektroden 20 während des Aushärtens eines in den Ringkanal 43 eingebrachten Kunststoffs, wobei die innere Gussform 41 ein erstes Innenteil 41.1 sowie ein zweites Innenteil 41.2 aufweist, und wobei die äußere Gussform 42 ein erstes Außenteil 42.1 und ein zweites Außenteil 42.2 aufweist. Ein Positionieren der Gussformen beinhaltet ein Zusammenführen des ersten Innenteils und des zweiten Innenteils sowie des ersten Außenteils und des zweiten Außenteils sowie ein Positionieren der Messelektroden nach Positionieren der inneren Gussform. Die Innenteile werden entlang einer durch das herzustellende Messrohr definierten Messrohrachse 30.1 zusammengeführt, wobei das erste Innenteil einen ersten Teil der Aussparung 45.1 aufweist, und wobei das zweite Innenteil einen zweiten Teil der Aussparung 45.2 aufweist, welche nach Zusammenführen der Innenteile die Aussparung 45 ausbilden. Auf diese Weise ist es möglich, Messelektroden im Messrohr zu vergießen, welche in den Führungskanal 31 hineinragen. Die Aufteilung der äußeren Gussform in ein erstes Außenteil und ein zweites Außenteil erlaubt es, die Messelektroden in die äußere Gussform zumindest teilweise zu integrieren und diese somit zu halten sowie die äußere Gussform ohne Deplatzierung der Messelektroden zu entfernen.

Fig. 4 b) zeigt einen zum in Fig. 3 b) gezeigten Ausschnitt eines Querschnitts korrespondierenden Auschnitt eines Längsschnitts durch ein beispielhaftes erfindungsgemäßes magnetisch-induktives Durchflussmessgerät mit einem Messrohr 30 nach Aushärten des Kunststoffs sowie nach Entfernen der Gussformen, wobei der ausgehärtete Kunststoff das Messrohr 30 des magnetisch-induktiven Durchflussmessgeräts ausbildet, wobei wie bereits in Fig. 3 b) gezeigt, eine Dichtung 50 in den die Messelektrode teilweise umgreifenden Vorsprung eingebracht ist. Das Messrohr kann wie in diesem Ausführungsbeispiel gezeigt, entlang der Messrohrachse einen variierenden Messrohrdurchmesser aufweisen. Der Messrohrdurchmesser kann entlang der Messrohrachse aber auch konstant sein.

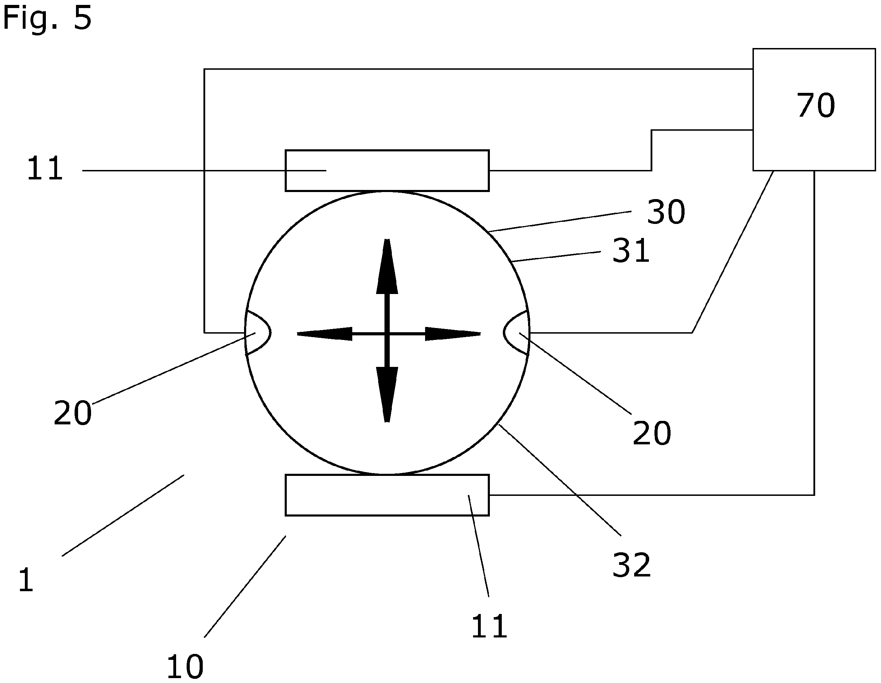

Fig. 5 skizziert schematisch den Aufbau eines magnetisch-induktiven Durchflussmessgeräts 1, welches ein Messrohr 30 mit einer Messrohrwand 32 aufweist, welche Messrohrwand einen Führungskanal 31 zum Führen eines Mediums ausbildet. Ein Magnetsystem 10 mit zwei Spulensystemen ist dazu eingerichtet, ein senkrecht zu einer Messrohrachse stehendes Magnetfeld (vertikale Pfeile) auszubilden, um im Medium eine durchflussabhängige sowie magnetfeldabhängige, senkrecht zum Magnetfeld verlaufende elektrische Spannung (waagerechte Pfeile) zu induzieren. Zwei Messelektroden sind dazu eingerichtet, die elektrische Spannung abzugreifen. Eine elektronische Mess-/Betriebsschaltung 70 ist dazu eingerichtet, die elektrische Spannung auszuwerten und eine durchflussabhängige Messgröße bereitzustellen, sowie das Magnetsystem 10 zu betreiben.

### Bezugszeichenliste

- 1: magnetisch-induktives Durchflussmessgerät
- 10: Magnetsystem
- 11: Spulensystem
- 20: Messelektrode
- 21: Stirnfläche
- 21.1: Mittenbereich
- 21.2: Randbereich
- 22.1: Einkerbung
- 22.2: Auswölbung
- 23: Messelektrodenmantelfläche
- 24: Elektrodenschaft
- 25: Längsachse
- 26: Elektrodenstift
- 27: Elektrodensackloch
- 30: Messrohr
- 30.1: Messrohrachse
- 31: Führungskanal
- 32: Messrohrwand
- 33: Führungskanalwand
- 41: innere Gussform
- 41.1: erstes Innenteil
- 41.2: zweites Innenteil
- 42: äußere Gussform
- 42.1: erstes Außenteil
- 42.2: zweites Außenteil
- 42.3: Aufnahme
- 43: Ringkanal
- 44: Dichtfläche
- 44.1: erster Teil der Dichtfläche
- 44.2: zweiter Teil der Dichtfläche
- 45: Aussparung
- 45.1: erster Teil der Aussparung
- 45.2: zweiter Teil der Aussparung
- 46: ringförmiger Vorsprung
- 50: Dichtung
- 70: elektronische Mess-/Betriebsschaltung
- 100: Verfahren
- 101: erster Verfahrensschritt
- 102: zweiter Verfahrensschritt
- 103: dritter Verfahrensschritt
- 104: vierter Verfahrensschritt

## Patentansprüche

1. Verfahren (100) zum Herstellen eines Messrohrs eines magnetisch-induktiven Durchflussmessgeräts (1) zur Messung des Volumendurchflusses bzw. der Durchflussgeschwindigkeit eines durch ein Messrohr (30) strömenden Mediums umfassend folgende Verfahrensschritte:
Bereitstellen und Positionieren einer inneren Gussform (41) und einer äußeren Gussform (42) sowie zweier Messelektroden (20) in einem ersten Verfahrensschritt (101),
wobei zwischen der inneren Gussform (41) und der äußeren Gussform (42) ein Ringkanal (43) gebildet ist, wobei der Ringkanal eine Ringkanalachse aufweist,
wobei die innere Gussform mindestens zwei einander abgewandte, ringförmige, Dichtflächen (44) aufweist, die jeweils eine Aussparung (45) der inneren Gussform (41) umgeben,
wobei die Oberflächennormalen der Dichtflächen in entgegengesetzte Richtungen senkrecht zur Ringkanalachse verlaufen,
wobei die Messelektroden (20) jeweils einen Elektrodenschaft (24) und eine zur Ringkanalachse gerichtete Stirnfläche (21) mit einem ringförmigen Randbereich (21.2) und einem von dem Randbereich umgebenen Mittenbereich (21.1) aufweisen,
wobei die beiden Messelektroden (20) von der äußeren Gussform jeweils in der Weise gehalten werden, dass die Elektrodenschafte (24) den Ringkanal jeweils in Richtung einer der Oberflächennormalen durchsetzen, und
dass die ringförmigen Randbereiche (21.2) an jeweils einer der ringförmigen Dichtfläche anliegen;
Ausfüllen des Ringkanals mit einem einen Messrohrkörper des Messrohrs bildenden Kunststoff durch Spritzgießen in einem zweiten Verfahrensschritt (102);
Aushärten lassen oder Aushärten des Kunststoffs in einem dritten Verfahrensschritt (103); und
Entfernen der inneren Gussform und der äußeren Gussform in einem vierten Verfahrensschritt (104),
wobei die Dichtflächen sowie die ringförmigen Randbereiche planar sind.

2. Verfahren nach Anspruch 1,
wobei die innere Gussform (41) einen ersten Innenteil (41.1) und einen zweiten Innenteil (41.2) aufweist, wobei das Bereitstellen der inneren Gussform ein Zusammenführen des ersten Innenteils und des zweiten Innenteils umfasst,
wobei ein erster Teil der Aussparung (45.1) sowie ein erster Teil der Dichtfläche (44.1) dem ersten Innenteil zugehörig sind, und wobei ein zweiter Teil der Aussparung (45.2) sowie ein zweiter Teil der Dichtfläche (44.2) dem zweiten Innenteil zugehörig sind.

3. Verfahren nach einem der vorigen Ansprüche,
wobei die äußere Gussform (42) ein erstes Außenteil (42.1) und ein zweites Außenteil (42.2) aufweist, wobei das Bereitstellen der äußeren Gussform ein Zusammenführen des ersten Außenteils und des zweiten Außenteils umfasst,
wobei die äußere Gussform jeweils eine Aufnahme (42.3) für die Messelektroden aufweist,
wobei jeweils ein erster Teil der Aufnahmen dem ersten Außenteil zugehörig sind, und wobei jeweils ein zweiter Teil der Aufnahmen dem zweiten Außenteil zugehörig sind.

4. Verfahren nach einem der vorigen Ansprüche,
wobei die Aufnahmen der äußeren Gussform die jeweilige Messelektrode (20) auf einer dem Ringkanal abgewandten Seite der Messelektroden (20) spritzgussdicht umgreifen.

5. Magnetisch-induktives Durchflussmessgerät (1) zur Messung des Volumendurchflusses bzw. der Durchflussgeschwindigkeit eines durch ein Messrohr strömenden Mediums umfassend:
Ein Messrohr (30) zum Führen des Mediums, welches Messrohr nach einem Verfahren gemäß einem der vorigen Ansprüche hergestellt ist, wobei das Messrohr eine Messrohrachse (30.1) aufweist;
ein Magnetsystem (10) mit mindestens einem Spulensystem (11) zum Erzeugen eines Magnetfelds, welches Magnetfeld senkrecht zur Messrohrachse steht;
ein Paar zumindest teilweise im Messrohr (30) angeordneter Messelektroden (20) zum Erfassen einer im Medium durch das Magnetfeld induzierten elektrischen Spannung, welche elektrische Spannung abhängig vom Durchfluss des Mediums sowie von der Stärke sowie der Ausrichtung des Magnetfelds ist, wobei die Messelektroden mit dem Medium in Kontakt stehen;
eine elektronische Mess-/Betriebsschaltung (70) zum Betreiben des Magnetsystems (10) und der Messelektroden (20), sowie zum Bestimmen und Ausgeben einer den Durchfluss repräsentierenden Messgröße,
wobei das Messrohr (30) entlang der Messrohrachse einen Führungskanal (31) aufweist, welcher Führungskanal während des Spritzgießens durch Überdecken der inneren Gussform (41) mittels eines Kunststoffs ausgebildet wird,
wobei jede Messelektrode (20) eine zur Messrohrachse gerichtete Stirnfläche (21) sowie eine Messelektrodenmantelfläche (23) aufweist, wobei die Messelektroden während des Spritzgießens bezüglich der inneren Gussform in Position gehalten sind,
wobei die Messelektroden (20) im Messrohr (30) eingegossen sind,
**dadurch gekennzeichnet, dass**
die Stirnfläche (21) einen ringförmigen Randbereich (21.2) und einem von dem Randbereich umgebenen Mittenbereich (21.1) aufweist,
wobei die Dichtflächen sowie die ringförmigen Randbereiche planar sind.

6. Magnetisch-induktives Durchflussmessgerät nach Anspruch 5,
wobei der Randbereich (21.2) der Messelektrode (20) mit einer Führungskanalwand (33) des Führungskanals (31) bündig abschließt.

7. Magnetisch-induktives Durchflussmessgerät nach Anspruch 5 oder 6,
wobei eine zur Stirnfläche (21) gewandte erste Seite der Messelektrodenmantelfläche (23) dicht von einer Messrohrwand (32) umschlossen ist.

8. Magnetisch-induktives Durchflussmessgerät nach Anspruch 7,
wobei die Messelektrode (20) im Bereich der ersten Seite mindestens eine Einkerbung (22.1) oder mindestens eine Auswölbung (22.2) zur Verankerung im Messrohr (30) aufweist.

9. Magnetisch-induktives Durchflussmessgerät nach Anspruch 8,
wobei die Messelektrode (20) eine die Stirnfläche schneidende Längsachse (25) aufweist, wobei die Einkerbung (22.1) bzw. Auswölbung (22.2) radialsymmetrisch um die Längsachse herum angeordnet ist.

10. Magnetisch-induktives Durchflussmessgerät nach einem der Ansprüche 5 bis 9,
wobei das Messrohr (30) auf einer Außenseite für jede Messelektrode (20) einen ringförmigen Vorsprung (46) aufweist, welcher Vorsprung dazu eingerichtet ist die Messelektrode (21) auf einer der Messrohrachse abgewandten zweiten Seite der Messelektrode zumindest abschnittsweise zu umgreifen, wobei die Messelektrode im Bereich der zweiten Seite von dem Vorsprung beabstandet ist.

11. Magnetisch-induktives Durchflussmessgerät nach Anspruch 10,
wobei das magnetisch-induktive Durchflussmessgerät für jede Messelektrode eine Dichtung (50) aufweist, welche in die Beabstandung eingepresst ist.

12. Magnetisch-induktives Durchflussmessgerät nach einem der vorigen Ansprüche 5 bis 11,
wobei ein Wärmeausdehnungskoeffizient des Messrohrs von einem Wärmeausdehnungskoeffizient der Messelektrode weniger als 30% und insbesondere weniger als 20% abweicht.

13. Magnetisch-induktives Durchflussmessgerät nach einem der vorigen Ansprüche 5 bis 11,
wobei die Messelektrode (20) auf einer der Stirnseite (21) abgewandten Seite einen Elektrodenstift (26) oder ein Elektrodensackloch (27) aufweist.

## Claims

1. Procedure (100) designed to make a measuring tube of an electromagnetic flowmeter (1) designed to measure the volume flow or the flow velocity of a medium flowing through a measuring tube (30), wherein said procedure comprises the following steps:
Provisioning and positioning of an inner mold (41) and an outer mold (42) as well as two measuring electrodes (20) in a first procedural step (101),
wherein an annular channel (43) is formed between the inner mold (41) and the outer mold (42), wherein the annular channel has an annular channel axis,
wherein the inner mold has at least two annular sealing surfaces (44), which face away from one another and each surround a recess (45) of the inner mold (41),
wherein the surface normals of the sealing surfaces extend in opposite directions in a manner that is perpendicular to the annular channel axis,
wherein the measuring electrodes (20) each have an electrode shaft (24) and a front face (21) that is oriented towards the annular channel axis with an annular periphery area (21.2) and a central area (21.1) surrounded by the periphery area,
wherein the two measuring electrodes (20) are each maintained by the outer mold in such a way that the electrode shafts (24) pass through the annular channel in the direction of one of the surface normals, and
that the annular periphery areas (21.2) each abut one of the annular sealing surfaces;
Filling in of the annular channel with a plastic material forming a measuring tube body of the measuring tube by means of injection molding in a second procedural step (102);
Hardening of the plastic material in a third procedural step (103); and
Removal of the inner mold and the outer mold in a fourth procedural step (104),
wherein the sealing surfaces and the annular periphery areas are planar.

2. Procedure as claimed in Claim 1,
wherein the inner mold (41) comprises a first inner part (41.1) and a second inner part (41.2), wherein the provision of the inner mold comprises bringing together the first inner part and the second inner part,
wherein a first part of the recess (45.1) and a first part of the sealing surface (44.1) belong to the first inner part, and a second part of the recess (45.2) as well as a second part of the sealing surface (44.2) belong to the second inner part.

3. Procedure as claimed in one of the previous claims,
wherein the outer mold (42) has a first outer part (42.1) and a second outer part (42.2), wherein the provision of the outer mold comprises bringing together the first outer part and the second outer part,
wherein the outer mold has a holder (42.3) for the measuring electrodes,
wherein a first part of the holders belongs to the first outer part, and wherein a second part of the holders belongs to the second outer part.

4. Procedure as claimed in one of the previous claims,
wherein the holders of the outer mold surround the measuring electrode (20) - with injection molding tightness - on a side of the measuring electrodes (20) facing away from the annular channel.

5. Electromagnetic flowmeter (1) designed to measure the volume flow or flow velocity of a medium flowing through a measuring tube, said flowmeter comprising:
a measuring tube (30) designed to conduct the medium, wherein said measuring tube is produced according to a procedure as claimed in one of the previous claims, wherein the measuring tube has a measuring tube axis (30.1);
a magnet system (10) with at least a coil system (11) designed to generate a magnetic field, wherein said magnetic field is perpendicular to the measuring tube axis;
a pair of measuring electrodes (20) at least partially arranged in the measuring tube (30), wherein said electrodes are designed to measure an electric voltage induced in the medium by the magnetic field, wherein said electric voltage depends on the flow of the medium and on the strength and orientation of the magnetic field, wherein the measuring electrodes are in contact with the medium;
an electronic measuring/operating circuit (70) designed to operate the magnet system (10) and the measuring electrodes (20), and to determine and output a measured variable representing the flow,
wherein the measuring tube (30) has a guide channel (31) along the measuring tube axis, wherein said guide channel is formed during the injection molding process by covering the inner mold (41) using a plastic material,
wherein each measuring electrode (20) has a front face (21) oriented towards the measuring tube axis and a measuring electrode lateral surface (23), wherein the measuring electrodes are maintained in position in relation to the inner mold during injection molding,
wherein the measuring electrodes (20) are molded into the measuring tube (30),
**characterized in that**
the front face (21) has an annular periphery area (21.2) and a central area (21.1) surrounded by the periphery area,
wherein the sealing surfaces and the annular periphery areas are planar.

6. Electromagnetic flowmeter as claimed in Claim 5,
wherein the periphery area (21.2) of the measuring electrode (20) is flush with a wall (33) of the guide channel (31).

7. Electromagnetic flowmeter as claimed in Claim 5 or 6,
wherein a first side of the lateral surface of the measuring electrode (23) facing towards the front face (21) is surrounded by a measuring tube wall (32) in a leaktight manner.

8. Electromagnetic flowmeter as claimed in Claim 7,
wherein, in the area of the first side, the measuring electrode (20) has at least an indentation (22.1) or at least a bulge (22.2) to anchor it in the measuring tube (30).

9. Electromagnetic flowmeter as claimed in Claim 8,
wherein the measuring electrode (20) has a longitudinal axis (25) that cuts the front face, wherein the indentation (22.1) or bulge (22.2) is arranged around the longitudinal axis in a radially symmetrical manner.

10. Electromagnetic flowmeter as claimed in one of the Claims 5 to 9,
wherein, on an outer side, the measuring tube (30) has an annular projection (46) for each measuring electrode (20), wherein said projection is designed to surround the measuring electrode (21), at least in sections, on a second side of the measuring electrode facing away from the measuring tube axis, wherein the measuring electrode is arranged at a distance from the projection in the area of the second side.

11. Electromagnetic flowmeter as claimed in Claim 10,
wherein the electromagnetic flowmeter has a seal (50) for each measuring electrode, wherein said seal is pressed into the gap.

12. Electromagnetic flowmeter as claimed in one of the previous Claims 5 to 11,
wherein a thermal expansion coefficient of the measuring tube deviates from a thermal expansion coefficient of the measuring electrode by less than 30 % and particularly by less than 20 %.

13. Electromagnetic flowmeter as claimed in one of the previous Claims 5 to 11,
wherein the measuring electrode (20) has an electrode pin (26) or an electrode blind hole (27) on a side facing away from the front face (21).

## Revendications

1. Procédé (100) destiné à la fabrication d'un tube de mesure d'un débitmètre électromagnétique (1) destiné à la mesure du débit volumique ou de la vitesse d'écoulement d'un produit s'écoulant à travers un tube de mesure (30), lequel procédé comprend les étapes suivantes :
Mise à disposition et positionnement d'un moule intérieur (41) et d'un moule extérieur (42) ainsi que de deux électrodes de mesure (20) dans une première étape de procédé (101),
un canal annulaire (43) étant formé entre le moule intérieur (41) et le moule extérieur (42), le canal annulaire présentant un axe de canal annulaire,
le moule intérieur présentant au moins deux surfaces d'étanchéité (44) annulaires, opposées l'une à l'autre, qui entourent chacune un évidement (45) du moule intérieur (41),
les normales aux surfaces d'étanchéité s'étendant dans des directions opposées perpendiculairement à l'axe du canal annulaire,
les électrodes de mesure (20) présentant chacune une tige d'électrode (24) et
une surface frontale (21) orientée vers l'axe de canal annulaire avec une zone marginale annulaire (21.2) et une zone centrale (21.1) entourée par la zone marginale,
les deux électrodes de mesure (20) étant respectivement maintenues par le moule extérieur de telle sorte que les tiges d'électrode (24) traversent le canal annulaire respectivement en direction d'une des normales à la surface, et
que les zones marginales annulaires (21.2) s'appliquent chacune contre l'une des surfaces d'étanchéité annulaires ;
Remplissage du canal annulaire avec une matière plastique formant un corps du tube de mesure par moulage par injection dans une deuxième étape de procédé (102) ;
Durcissement de la matière plastique dans une troisième étape du procédé (103) ; et
Retrait du moule intérieur et du moule extérieur dans une quatrième étape de procédé (104),
les surfaces d'étanchéité ainsi que les zones marginales annulaires étant planes.

2. Procédé selon la revendication 1,
pour lequel le moule intérieur (41) comprend une première partie intérieure (41.1) et une deuxième partie intérieure (41.2), la mise à disposition du moule intérieur comprenant l'assemblage de la première partie intérieure et de la deuxième partie intérieure,
une première partie de l'évidement (45.1) ainsi qu'une première partie de la surface d'étanchéité (44.1) appartenant à la première partie intérieure, et une deuxième partie de l'évidement (45.2) ainsi qu'une deuxième partie de la surface d'étanchéité (44.2) appartenant à la deuxième partie intérieure.

3. Procédé selon l'une des revendications précédentes,
pour lequel le moule extérieur (42) comporte une première partie extérieure (42.1) et une deuxième partie extérieure (42.2), la mise à disposition du moule extérieur comprenant un assemblage de la première partie extérieure et de la deuxième partie extérieure,
le moule extérieur présentant respectivement un logement (42.3) pour les électrodes de mesure,
une première partie des logements appartenant respectivement à la première partie extérieure, et une deuxième partie des logements appartenant respectivement à la deuxième partie extérieure.

4. Procédé selon l'une des revendications précédentes,
pour lequel les logements du moule extérieur entourent - de manière étanche au moulage par injection - l'électrode de mesure (20) respective sur un côté, opposé au canal annulaire, des électrodes de mesure (20).

5. Débitmètre électromagnétique (1) destiné à la mesure du débit volumique ou de la vitesse d'écoulement d'un produit s'écoulant à travers un tube de mesure, lequel débitmètre comprend :
un tube de mesure (30) destiné à guider le produit, lequel tube de mesure est fabriqué selon un procédé conforme à l'une des revendications précédentes, le tube de mesure comprenant un axe de tube de mesure (30.1) ;
un système magnétique (10) avec au moins un système de bobines (11) destiné à générer un champ magnétique, lequel champ magnétique est perpendiculaire à l'axe de tube de mesure ;
une paire d'électrodes de mesure (20) disposées au moins partiellement dans le tube de mesure (30), lesquelles électrodes sont destinées à mesurer une tension électrique induite dans le produit par le champ magnétique, laquelle tension électrique dépend du débit du produit ainsi que de l'intensité et de l'orientation du champ magnétique, les électrodes de mesure étant en contact avec le produit ;
un circuit électronique de mesure/d'exploitation (70) destiné à exploiter le système magnétique (10) et les électrodes de mesure (20), ainsi qu'à déterminer et à délivrer une grandeur de mesure représentant le débit,
le tube de mesure (30) présentant un canal de guidage (31) le long de l'axe du tube de mesure, lequel canal de guidage est formé pendant le moulage par injection en recouvrant le moule intérieur (41) au moyen d'une matière plastique,
chaque électrode de mesure (20) présentant une surface frontale (21) orientée vers l'axe de tube de mesure ainsi qu'une surface d'enveloppe d'électrode de mesure (23), les électrodes de mesure étant maintenues en position par rapport au moule intérieur pendant le moulage par injection,
les électrodes de mesure (20) étant coulées dans le tube de mesure (30),
**caractérisé en ce que**
la surface frontale (21) présente une zone marginale annulaire (21.2) et une zone centrale (21.1) entourée par la zone marginale,
les surfaces d'étanchéité ainsi que les zones marginales annulaires étant planes.

6. Débitmètre électromagnétique selon la revendication 5,
pour lequel la zone marginale (21.2) de l'électrode de mesure (20) est à fleur d'une paroi (33) du canal de guidage (31).

7. Débitmètre électromagnétique selon la revendication 5 ou 6,
pour lequel un premier côté - tourné vers la surface frontale (21) - de la surface d'enveloppe de l'électrode de mesure (23) est entouré de manière étanche par une paroi de tube de mesure (32).

8. Débitmètre électromagnétique selon la revendication 7,
pour lequel l'électrode de mesure (20) présente dans la zone du premier côté au moins une encoche (22.1) ou au moins un renflement (22.2) pour l'ancrage dans le tube de mesure (30).

9. Débitmètre électromagnétique selon la revendication 8,
pour lequel l'électrode de mesure (20) présente un axe longitudinal (25) coupant la surface frontale, l'encoche (22.1) ou le renflement (22.2) étant disposé avec une symétrie radiale autour de l'axe longitudinal.

10. Débitmètre électromagnétique selon l'une des revendications 5 à 9,
pour lequel le tube de mesure (30) présente sur un côté extérieur pour chaque électrode de mesure (20) une saillie annulaire (46), laquelle saillie est conçue pour entourer au moins par sections l'électrode de mesure (21) sur un deuxième côté de l'électrode de mesure opposé à l'axe de tube de mesure, l'électrode de mesure étant espacée de la saillie dans la zone du deuxième côté.

11. Débitmètre électromagnétique selon la revendication 10,
le débitmètre électromagnétique comprenant, pour chaque électrode de mesure, un joint d'étanchéité (50), lequel joint est pressé dans l'espacement.

12. Débitmètre électromagnétique selon l'une des revendications 5 à 11,
pour lequel un coefficient de dilatation thermique du tube de mesure s'écarte d'un coefficient de dilatation thermique de l'électrode de mesure de moins de 30 % et notamment de moins de 20 %.

13. Débitmètre électromagnétique selon l'une des revendications 5 à 11,
pour lequel l'électrode de mesure (20) présente, sur un côté opposé à la face frontale (21), une broche d'électrode (26) ou un trou borgne d'électrode (27).
